# EUROPÄISCHE PATENTSCHRIFT

(11) **EP 1 500 487 B1**
(45) Veröffentlichungstag und Bekanntmachung des Hinweises auf die Patenterteilung: **23.05.2007**
(21) Anmeldenummer: 03014833.2
(22) Anmeldetag: 30.06.2003
(51) Int. Cl.: B29C 45/14, B29C 39/10, B22D 17/00

(54) **Verfahren zum Herstellen eines Bedienelementes und ein Bedienelement**
Method of manufacturing an operating element and operating element
Procédé de fabrication d'un élément de commande et élément de commande

(43) Veröffentlichungstag der Anmeldung: 26.01.2005
(73) Patentinhaber: HDO -Druckguss- und Oberflächentechnik GmbH, 33106 Paderborn (DE)
(72) Erfinder: Stümpel, Josef, 33178 Borchen (DE)
(74) Vertreter: Ostermann, Thomas

(56) Entgegenhaltungen:
- EP-A- 1 308 259
- DE-A- 19 542 913
- DE-C- 19 915 510
- GB-A- 2 311 748

## Beschreibung

Die Erfindung betrifft Verfahren zum Herstellen eines Bedienelementes nach dem Oberbegriff des Patentanspruchs 1.

Ferner betrifft die Erfindung ein Bedienelement nach dem Oberbegriff des Patentanspruchs 12.

Aus der DE 195 42 913 A1 ist ein Verfahren zum Herstellen eines Bedienelementes für Kraftfahrzeuge bekannt, bei dem die Vorderseite des Bedienelementes aus einem lichtdurchlässigen Material besteht. Die Vorderseite weist zum einen einen lichtdurchlässigen Bereich auf, der die Form eines Symbols zur Kennzeichnung der Bedienfunktion aufweist. Das Symbol wird durch eine lichtdurchlässig weiße Lackierung erzeugt. Zum anderen weist die Vorderseite einen lichtundurchlässigen Bereich auf, der das lichtdurchlässige Symbol umgibt und der durch eine lichtundurchlässig schwarze Lackierung erzeugt wird.

Die bekannte Druckschrift ist auf die Herstellung von Bedienelementen aus Kunststoffen beschränkt.

Aus dem Dokument GB-A-2 311 748 ist ein Verfahren zum Herstellen eines Bedienelementes bekannt, bei dem ein metallischer Funktionskörper mit Durchbrüchen versehen wird zur Bildung von Ziffern oder Symbolen. Der Funktionskörper ist eben ausgebildet. Auf einer Rückseite des Funktionskörpers ist eine transparente Masse angespritzt, die zumindest teilweise in die Durchbrüche des Funktionskörpers eindringt. Die Stabilität des Bedienelementes wird im Wesentlichen durch die als einen Kunststoffkörper ausgebildete transparente Masse gebildet. Nachteilig an dem bekannten verfahren ist, dass der Aufwand zur Befestigung des Bedienelementes an benachbarte Gehäuseteile relativ aufwändig ist.

Aus der DE 199 15 510 C1 ist ein Bedienelement für Kraftfahrzeuge mit einem Funktionskörpers bekannt, der als ein Gießteil ausgebildet ist. Das Gießteil weist einen Durchbruch auf, in den eine transparente gefüllt ist und eine Hinterleuchtung des durch die Kontur des Durchbruchs repräsentierten Symbols ermöglicht. Nachteilig an dem bekannten Bedienelement ist, dass die Herstellung desselben relativ aufwändig durch Gießen von Wandungsflächen und Abtragen derselben nach Einbringen der transparenten Masse in den Durchbruch ist.

Aufgabe der vorliegenden Erfindung ist es, ein Verfahren zum Herstellen eines Bedienelementes bzw. ein Bedienelement bereitzustellen, so dass auf kostengünstige Weise ein metallisches Bedienelement mit einer beleuchtbaren integrierten Bedienfunktion geschaffen wird.

Zur Lösung dieser Aufgabe weist das erfindungsgemäße verfahren die Mekrmale des Patentanspruchs auf.

Nach dem erfindungsgemäßen Verfahren wird ein Integrieren von durchleuchtbaren Symbolen in einem metallischen Bedienelement ermöglicht. Zur Erzeugung des Symbols wird zum ersten ein Durchbruch in der Form des Symbols erzeugt. Zum zweiten wird der Durchbruch dann von einer Seite her mit einer transparenten Masse bedeckt bzw. angefüllt. Die transparente Masse erzeugt zum einen ein Streuen des von einer Rückseite des Bedienelementes her eingekoppeltes Licht. Zum anderen verhindert die transparente Masse das Eindringen von Schmutzpartikeln durch den Durchbruch in das Innere des Bedienelementes. Nach dem erfindungsgemäßen Verfahren wird mit dem Druckgießen eines metallischen Funktionskörpers gleichzeitig mindestens ein Lagersteg hergestellt zur Befestigung des Bedienelementes an ein benachbartes Bauteil.

Nach einer bevorzugten Weiterbildung des erfindungsgemäßen Verfahrens nach Anspruch 2 wird die transparente Masse von einer Rückseite des Bedienelementes her auf einen den Durchbruch umgebenden Randbereich desselben aufgebracht, wobei die Viskosität der Vergussmasse auf die Breite des Durchbruchs abgestimmt ist. Vorzugsweise ist die transparente Masse als Vergussmasse ausgebildet, die mit ihrer haftenden Wirkung an dem Randbereich des Durchbruchs anliegt. Durch den Grad der Viskosität wird zum einen die Formgebung der transparenten Masse im Bereich des Durchbruchs und zum anderen die Eindringtiefe der transparenten Masse in den Durchbruch vorgegeben.

Nach einer Weiterbildung der Erfindung gemäß Anspruch 3 wird die transparente Masse durch dosiertes Zuführen eines Vergusstropfens von der Rückseite des Bedienelementes her auf den Durchbruch aufgebracht. Das erfindungsgemäße Verfahren macht sich dabei die Kapillarwirkung des relativ schmalen Durchbruchs zu Nutze, mittels derer der Vergusstropfen in den Durchbruch eingedrückt wird. Die Viskosität bzw. die Adhäsionskräfte des Vergusstropfens ist so gewählt, dass ein Abreißen des Vergusstropfens von der Rückseite des Bedienelementes her nicht erfolgen kann.

Nach einer Weiterbildung des erfindungsgemäßen Verfahrens gemäß Anspruch 4 wird die transparente Masse nach dem Aufbringen auf den Randbereich des Durchbruchs ausgehärtet. Vorteilhaft verfestigt sich hierdurch die transparente Masse, so dass der Durchbruch vollständig abgedichtet ist.

Nach einer Weiterbildung des erfindungsgemäßen Verfahrens nach Anspruch 6 wird der Durchbruch durch Fräsen oder Stanzen oder Schneiden oder durch Ätzen erzeugt. Die Wahl der Maßnahme für die Durchbruchherstellung hängt von der Dimensionierung und der Form des Durchbruchs ab.

Nach einer Weiterbildung des erfindungsgemäßen Verfahrens gemäß Anspruch 8 wird die Vergussmasse eingefärbt, so dass eine gewünschte Farbwirkung unabhängig von der Lichtquelle erzeugt werden kann.

Nach einer Weiterbildung des erfindungsgemäßen Verfahrens nach Anspruch 9 wird das Bedienelement in einer Gussform durch Zinkdruckgießen erzeugt, wobei das Bedienelement relativ dünne Wandungen aufweist. Hierdurch kann das Gewicht des Bedienelementes wesentlich reduziert werden.

Nach einer Weiterbildung des erfindungsgemäßen Verfahrens gemäß Anspruch 11 wird im Randbereich des Durchbruchs ein Positionierrahmen angeformt, so dass auf einfache Weise das Aufbringen des Vergusstropfens auf den Randbereich gesteuert werden kann. Der Positionierrahmen kann durch optische Erkennung erfasst werden. Zum anderen ermöglicht der Positionierrahmen mit seinen Erhebungen eine Konzeptration des Vergusstropfens im Bereich des Durchbruchs, so dass materialsparend eine ausreichende Dicke der aushärtbaren Vergussmasse gewährleistet ist.

Zur Lösung der Aufgabe weist das erfindungsgemäße Bedienelement die Merkmale des Patentanspruchs 12 auf.

Erfindungsgemäß wird ein metallisches Bedienelement gesachaffen geschaffen ist mit einem lichtdurchlässigen Bereich, der langzeitstabil und zuverlässig eine visuelle Wahrnehmung der Funktion des Bedienelementes durch den Nutzer ermöglicht. Vorteilhaft ermöglicht das Bedienelement einen "echten" Metalllook, der nicht nur optisch, sondern auch bei Berührung wahrnehmbar ist. Erfindungsgemäß ermöglicht ein Positionierrahmen, dass eine transparente Masse erleichtert auf der Rückseite eines Funktionskörpers des Bedienelementes positioniert werden kann.

Nach einer bevorzugten Ausführungsform des Bedienelementes gemäß Anspruch 13 ist die transparente Masse als schnellhärtenden Masse ausgebildet, so dass die transparente Masse nach Aufbringen derselben auf den Randbereich des Durchbruchs relativ schnell an dem Randbereich des Durchbruchs haftet.

Nach einer Weiterbildung des Bedienelementes gemäß Anspruch 14 wird der Durchbruch vollständig durch die transparente Masse abgedeckt, so dass keine Schmutzpartikel von außen in das Bedienelement eindringen kann und zu unerwünschten Einschränkungen der Leuchtwirkung führen.

Nach einer Weiterbildung des erfindungsgemäßen Bedienelementes gemäß Anspruch 15 füllt die transparente Masse fast vollständig den Durchbruch aus, so dass das Entfernen von unerwünschten Schmutzpartikeln auf der transparenten Masse erleichtert wird.

Nach einer Weiterbildung des erfindungsgemäßen Bedienelementes gemäß Anspruch 16 kann sich die transparente Masse an der auf einer der Vorderseite des Bedienelementes zugekehrten Seite erhaben oder vertieft ausgebildet sein, so dass das Symbol auch haptisch wahrnehmbar ist. Zusätzlich kann hierdurch der Streuungsgrad für das eingekoppelte Lichtbündel beeinflusst werden.

Nach einer Weiterbildung des erfindungsgemäßen Bedienelements gemäß Anspruch 17 ist die Viskosität bzw. sind die Adhäsionskräfte der transparenten Masse auf die Dimensionierung des Durchbruchs abgestimmt. Stets wird eine vollkommene Abdichtung des Durchbruchs erzeugt. Darüber hinaus kann die Formgebung der Vergussmasse vorgegeben werden.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine perspektivische Ansicht eines Bedienelementes,
- Figur 2: eine Draufsicht auf das Bedienelement,
- Figur 3: eine Rückansicht des Bedienelementes,
- Figur 4: einen Längsschnitt durch das Bedienelement und
- Figur 5: einen teilweisen Schnitt entlang der Linie V-V in Figur 2.

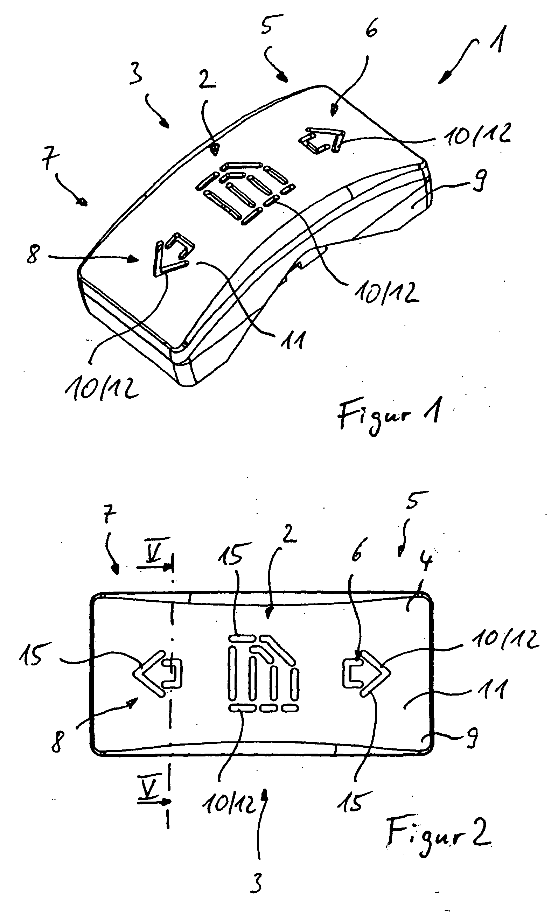

Ein Bedienelement 1 gemäß den Figuren 1 bis 5 dient als Wippschalter zur Betätigung eines elektrischen Fensterhebers in einem Kraftfahrzeug. Das Bedienelement 1 kann alternativ auch zur Betätigung von anderen Fahrzeugfunktionen, wie beispielsweise die Heckscheibenheizung, Sitzheizung, Heckscheibenwaschanlage oder Klimaanlage eingesetzt werden. Die Formgebung ist an die entsprechende Bedienfunktion angepasst. Das Bedienelement kann auch in anderen Einsatzbereichen verwendbar sein, in denen ein Bediener manuell durch Betätigen des Bedienelementes eine bestimmte Funktion auslösen will, zum Beispiel in Flugzeugen, Schiffen oder Arbeitsmaschinen.

Das vorliegende Bedienelement 1 ist rechteckförmig konturiert und wird im Bereich einer Armlehne einer Kraftfahrzeugtür positioniert zur elektrischen Betätigung einer nicht dargestellten Fensterscheibe. Die Bedienfunktion "elektrische Fensterscheibe" wird durch ein Bediensymbol 2 gekennzeichnet, das in einem mittleren Bereich 3 einer Vorderseite 4 des Bedienelementes 1 angeordnet ist. In einem ersten Wippendbereich 5 ist ein erstes Pfeilsymbol 6 angeordnet, mittels dessen eine ersten Bedienfunktion aufrufbar ist. Beispielsweise kann durch Betätigen des ersten Wippendbereichs 5 die Fensterscheibe geöffnet werden in einem gegenüberliegenden zweiten Wippendbereich 7 ist ein zweites Pfeilsymbol 8 angeordnet, mittels dessen eine zweite Bedienfunktion aufrufbar ist. Beispielsweise kann durch Betätigen des zweiten Wippendbereichs 7 die Fensterscheibe geschlossen werden.

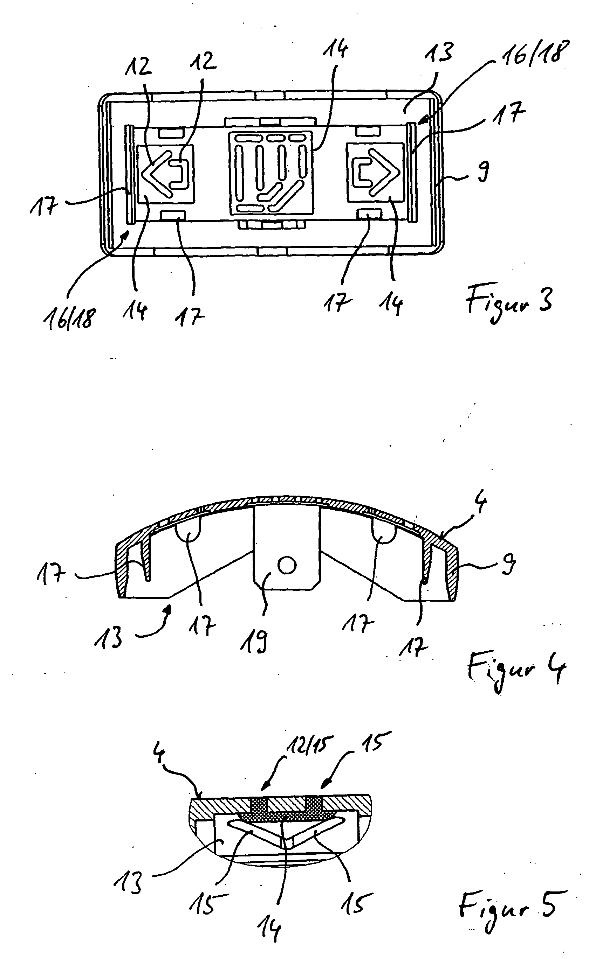

Die Symbole 2, 6, 8 sind beleuchtbar ausgebildet, so dass die Bedienperson dieselben auch im Dunkeln erkennen und die entsprechende Bedienfunktion aktivieren kann. Zu diesem Zweck weist das als einstückiger Funktionskörper 9 ausgebildete Bedienelement 1 an der Vorderseite 4 einen lichtdurchlässigen Bereich 10 und einen lichtundurchlässigen Bereich 11 auf. Der lichtdurchlässige Bereich 10 wird durch Durchbrüche 12 gebildet, die von einer Rückseite 13 des Funktionskörpers 9 her mit einer transparenten Masse 14 abgedeckt sind. Der lichtundurchlässige Bereich 11 wird durch die nach vorne weisende Fläche des Funktionskörpers 9 gebildet und begrenzt die Durchbrüche 12. Die Formgebung der Durchbrüche 12 bildet die Symbole 2, 6, 8. Die Durchbrüche 12 sind als Schlitze 15 ausgebildet, die - wie später beschrieben wird - in einem Herstellungsschritt gebildet werden. Die Schlitze 15 sind über die gesamte Breite und Länge von der transparenten Masse 14 abgedeckt. Wie besser aus Figur 3 und 5 ersichtlich ist, erstreckt sich die transparente Masse 14 über die gesamte Tiefe der Schlitze 15, wobei sie bündig zu der Vorderseite 4 des Funktionskörpers 9 abschließt. Die transparente Masse 14 ist auf der Rückseite 13 des Funktionskörpers 9 durch einen Positionierrahmen 16 begrenzt, der sich mit unterbrochenen zur Rückseite hin abragenden Stegen 17 rechteckförmig oder quadratisch in einem Randbereich 18 der entsprechenden Symbol 2, 6, 8 erstreckt. Der Positionierrahmen 16 ermöglicht eine Konzentrierung der im zähflüssigen Zustand aufgetragenen transparenten Masse 14 im Bereich der Symbole 2, 6, 8.

Nach einer nicht dargestellten alternativen Ausführungsform können die Stege 17 des Positionierrahmens 16 auch durchgehend ausgebildet sein, so dass die transparente Masse 14 vollständig umschlossen ist. Hierdurch könnte eine örtliche Begrenzung der transparenten Masse 14 erfolgen, wenn dieselbe relativ dünnflüssig ausgebildet ist.

Nach einer alternativen Ausführungsform kann die transparente Masse 14 in einer Vertiefung eingelassen sein, wobei die Vertiefung den Positionierrahmen 16 bildet.Nach einer nicht dargestellten Ausführungsform kann die transparente Masse 14 auf einer der Rückseite 13 zugewandten Seite und/oder einer der Vorderseite 4 zugewandten Seite konvex- oder konkavförmig ausgebildet sein. Hierdurch kann beispielsweise eine optische Wirkung des durch eine nicht dargestellte Lichtquelle ausgesandten Lichtbündels erzielt werden. Zum anderen kann bei nicht bündiger Erstreckung der transparenten Masse 14 an der Vorderseite 4 des Funktionskörpers 9 das Bediensymbol 2, 6, 8 haptisch ausgebildet sein, so dass die Bedienfunktion auch bei Nichthingucken der Bedienperson leichter aktivierbar ist.

Die Formgebung der transparenten Masse 14 kann durch die Wahl der Viskosität derselben oder durch zusätzliche Werkzeugmittel bei der Herstellung des Bedienelementes 1, wie beispielsweise Anschläge, bestimmt werden.

Die transparente Masse 14 kann als transluszente (durchscheinende) Masse ausgebildet sein, der eine lichtstreuende Wirkung zukommt. Nach einer alternativen Ausführungsform kann die transparente Masse 14 auch klarsichtig ausgebildet sein. Die optische Eigenschaft der transparenten Masse hängt von dem Einsatzzweck des Bedienelementes 1 ab.

Vorzugsweise ist die transparente Masse 14 als Vergussmasse ausgebildet, die dosiert durch Bildung eines Tropfens im zähflüssigen Zustand, der auf der Rückseite 13 des Funktionskörpers 9 aufgetragen wird, erzeugt wird. Nach einer nicht dargestellten Ausführungsform kann bereits bei der Herstellung oder nachträglich eine Kunststofflinse oder ein Lichtleiter auf die Rückseite 13 der Vergussmasse 14 aufgesetzt werden. Bei der Ausführung des Bedienelementes 1 als Wippschalter muss die Kunststofflinse bzw. der Lichtleiter in einem vorgegeben Abstand zu der Rückseite der Vergussmasse 14 angeordnet sein.

Die Herstellung des Bedienelementes 1 wird im folgenden beschrieben.

Der metallische Funktionskörper 9 des Bedienelementes 1 wird durch Druckgießen in einer Gussform hergestellt, wobei der Formkörper aus einem Zinkguss-, Aluminiumguss- oder Magnesiumgussmaterial bestehen kann. Zur dünnwandigen Ausbildung des Funktionskörpers 9 wird der Funktionskörper 9 vorzugsweise als ein Zinkdruckgussteil ausgebildet sein.

In einem optionalen zweiten Schritt kann der Funktionskörper 9 poliert werden.

In einem weiteren Schritt wird der Funktionskörper 9 in üblicher Weise galvanisiert.

In einem weiteren Schritt erfolgt die Bildung der Durchbrüche 12 wahlweise durch Fräsen oder Stanzen oder Laserschneiden oder durch Ätzen. Optional kann dieser Verfahrensschritt auch vor dem vorstehend beschriebenen Galvanisieren erfolgen.In einem weiteren Schritt wird dann die transparente Masse 14 von der Rückseite 13 des Funktionskörpers 9 her auf den durch den Positionierrahmen 16 umgrenzten Bereich aufgetragen. Der Positionierrahmen 16 ist einstückig mit dem Funktionskörper 9 verbunden. Er wird zusammen mit in einem mittleren Bereich 3 angeordneten Lagerstege 19 des Bedienelementes 1 in einem Druckgussteil hergestellt. Die transparente Masse 14 ist als Vergussmasse ausgebildet, die in Form eines Tropfens auf die Rückseite 13 des Funktionskörpers 9 aufgetragen wird. Die Viskosität bzw. die Adhäsionsneigung der Vergussmasse 14 ist derart vorgegeben, dass die Vergussmasse 14 selbsttätig in die Durchbrüche 12 eindringen kann, ohne dass ein Abreißen von Teilbereichen des Vergusstropfens 14 erfolgt. Die Positionierung der Vergussmasse 14 erfolgt somit selbsttätig, wobei auf der Rückseite 13 der Positionierrahmen 16 die seitliche Ausdehnung des Vergusstropfens 14 begrenzt. Nach einer alternativen Ausführungsform kann auf einer Vorderseite auch ein auf die Durchbrüche 12 aufgesetzter Anschlag angeordnet sein, der eine bündige Verteilung des Vergusstropfens auch in relativ dünnflüssigem Zustand innerhalb des Durchbruchs 12 ermöglicht.

Das Eindringen der transparenten Masse 14 wird durch die Kapillarwirkung der Schlitze 15 unterstützt. Hierbei ist die Breite der Schlitze 15 auf die Viskosität der transparenten Masse 14 abgestimmt oder umgekehrt.

Nach einer weiteren Ausführungsform kann die transparente Masse 14 auch hinterspritzt werden. Hierbei ist eine Abdeckung der Durchbrüche 12 auf der Vorderseite 4 erforderlich.

Die transparente Masse 14 kann eingefärbt ausgebildet sein, so dass auf die Farbe des Symbols 2, 6, 8 eingewirkt werden kann. Beispielsweise kann die transparente Masse 14 gelb, orange, blau eingefärbt sein, so dass beispielsweise bei einer weißes Licht abgebenden Lichtquelle (Leuchtdiode) eine Anpassung an die Optik des Interieurs des Kraftfahrzeugs gewährleistet ist.

In einem optionalen letzten Schritt kann die transparente Masse 14 ausgehärtet werden. Die Aushärtung kann durch UV-Strahlung, durch einen Elektronenstrahl oder thermisch erfolgen. Alternativ kann die Aushärtung auch selbsttätig in Folge des chemischen Aufbaus der transparenten Masse 14 erfolgen. Beispielsweise kann die transparente Masse als ein Epoxidkleber ausgebildet sein oder einen anderen isotropen Kleber. Die transparente Masse 14 kann als aushärtbare Masse, vorzugsweise als schnellhärtende Masse ausgebildet.

Nach Fertigstellung des Bedienelementes 1 kann dasselbe nun mittels der Lagerstege 19 an ein nicht dargestelltes Gehäuse angelenkt werden, indem eine oder mehrere nicht dargestellte Lichtquellen oder Lichtleiter angeordnet sind.

## Patentansprüche

1. Verfahren zum Herstellen eines Bedienelementes, insbesondere für ein Kraftfahrzeug, bei dem an einer Vorderseite des Bedienelements ein lichtdurchlässiger Bereich in Form mindestens eines Symbols zur Kennzeichnung der Bedienfunktion und ein lichtundurchlässiger Bereich gebildet wird, wobei
- das Bedienelement (1) als metallischer Funktionskörpers (9) geformt wird,
- an der Vorderseite (4) des Bedienelementes (1) mindestens ein Durchbruch (12) in einem Herstellungsschritt erzeugt wird entsprechend der Form des lichtdurchlässigen Bereichs des Bedienelementes (1) und
- der Durchbruch (12) zumindest bereichsweise mit einer transparenten Masse (14) gefüllt wird,
**dadurch gekennzeichnet, dass** der metallische Funktionskörper (9) unter Bildung mindestens eines abragenden Lagerstegs (19) durch Druckgießen geformt wird.

2. Verfahren nach Anspruch 1, **dadurch gekennzeichnet, dass** die transparente Masse (14) an einer Rückseite (13) des Bedienelementes (1) auf einem den Durchbruch (12) umgebenden Randbereich (18) aufgebracht wird, wobei die Viskosität der transparenten Masse (14) auf die Breite des Durchbruchs (12) abgestimmt ist.

3. Verfahren nach Anspruch 1 oder 2, **dadurch gekennzeichnet, dass** die transparente Masse (14) durch dosiertes Zuführen eines Vergusstropfens auf die Rückseite (13) des Bedienelementes (1) in den Durchbruch (12) eingegossen wird.

4. Verfahren nach einem der Ansprüche 1 bis 3, **dadurch gekennzeichnet, dass** die transparente Masse (14) nach dem Aufbringen auf das Bedienelement (1) ausgehärtet wird.

5. Verfahren nach Anspruch 4, **dadurch gekennzeichnet, dass** die transparente Masse (14) durch UV-Strahlung oder durch einen Elektronenstrahl oder thermisch oder in Folge des chemischen Aufbaus derselben selbsttätig ausgehärtet wird.

6. Verfahren nach einem der Ansprüche 1 bis 5, **dadurch gekennzeichnet, dass** der Durchbruch (12) durch Fräsen oder durch Stanzen oder durch Schneiden oder durch Ätzen erzeugt wird.

7. Verfahren nach einem der Ansprüche 1 bis 6, **dadurch gekennzeichnet, dass** das Bedienelement (1) vor dem Bilden des Durchbruchs (12) poliert wird.

8. Verfahren nach einem der Ansprüche 1 bis 7, **dadurch gekennzeichnet, dass** die transparente Masse (14) eingefärbt wird.

9. Verfahren nach einem der Ansprüche 1 bis 8, **dadurch gekennzeichnet, dass** das Bedienelement (1) durch Zinkdruckgießen geformt wird.

10. Verfahren nach einem der Ansprüche 1 bis 8, **dadurch gekennzeichnet, dass** der Durchbruch (12) an der Rückseite (13) des Bedienelementes (1) mit der transparenten Masse (14) hinterspritzt wird.

11. Verfahren nach einem der Ansprüche 1 bis 10, **dadurch gekennzeichnet, dass** an der Rückseite des Bedienelementes (1) in dem Randbereich (18) des Durchbruchs (12) ein Positionierrahmen (16) angeformt wird.

12. Bedienelement für Kraftfahrzeuge mit einem Funktionskörper, der an einer Vorderseite einen lichtdurchlässigen Bereich in Form mindestens eines Symbols zur Kennzeichnung der Bedienfunktion einerseits und einem lichtundurchlässigen Bereich andererseits aufweist, dass der Funktionskörper (9) als ein Druckgießteil mit mindestens einem über die gesamte Tiefe des Druckgießteils (9) verlaufenden und zumindest teilweise mit einer transparenten Masse (14) gefüllten Durchbruch (12) in dem lichtdurchlässigen Bereich (10) ausgebildet ist, **dadurch gekennzeichnet, dass** sich in dem Randbereich (18) des Durchbruchs (12) von der Rückseite (13) des Funktionskörpers (9) her ein Positionierrahmen (16) erhebt zur Begrenzung und/oder Aufnahme der transparenten Masse (14).

13. Bedienelement nach Anspruch 12, **dadurch gekennzeichnet, dass** die transparente Masse (14) als schnellhärtende Masse ausgebildet ist, die auf einer Rückseite (13) des Bedienelementes (1) unter Haftung an einem Randbereich (18) des Durchbruchs (12) aufgebracht ist.

14. Bedienelement nach Anspruch 12 oder 13, **dadurch gekennzeichnet, dass** der Durchbruch (12) über die gesamte Breite und Länge von der transparenten Masse (14) abgedeckt ist.

15. Bedienelement nach einem der Ansprüche 12 bis 14, **dadurch gekennzeichnet, dass** der Durchbruch (12) in der Tiefe von der transparenten Masse (14) derart ausgefüllt ist, dass sich die transparente Masse (14) bündig zu der Vorderseite (4) des Funktionskörpers (9) erstreckt.

16. Bedienelement nach einem der Ansprüche 12 bis 15, **dadurch gekennzeichnet, dass** sich die transparente Masse (14) erhaben oder vertieft zu der Vorderseite (4) des Funktionskörpers (9) erstreckt, derart, dass das Symbol (2, 6, 8) haptisch wahrnehmbar ist.

17. Bedienelement nach einem der Ansprüche 12 bis 16, **dadurch gekennzeichnet, dass** die Viskosität der transparenten Masse (14) auf die Dimension des Durchbruchs (12) abgestimmt ist, derart, dass die transparente Masse (14) haftend an dem Randbereich (18) des Durchbruchs (12) unter mindestens teilweiser Füllung desselben anliegt.

18. Bedienelement nach einem der Ansprüche 12 bis 17, **dadurch gekennzeichnet, dass** die transparente Masse (14) als transluszente Vergussmasse ausgebildet ist.

19. Bedienelement nach einem der Ansprüche 12 bis 19, **dadurch gekennzeichnet, dass** der Positionierrahmen (16) durch voneinander beabstandete Stege (17) gebildet ist.

## Claims

1. Method for making a control element, especially a control element for use in a motor vehicle, wherein the front face of the element comprises a transparent section having the shape of a symbol defining the control function, and a section impervious to light and wherein the control element (1) is provided as a metallic functional body (9), wherein at least one opening (12) is formed in the front face (4) of the control element (1) in one of the production steps which opening conforms to the shape of said transparent section and wherein the opening (12) is at least partly filled with a transparent mass (14), **characterized by** the fact that said metallic functional body (9) is provided by pressure die casting while forming at least one protruding mounting web (19).

2. Method as set forth in Claim 1, **characterized by** the fact that the transparent mass (14) is applied to a marginal area (18) surrounding the opening (12) in the rear face of the control element (1), the viscosity of said transparent mass (14) being selected dependent on the width of the opening (12).

3. Method as set forth in Claim 1 or 2, **characterized by** the fact that the transparent mass (14) is injected into the opening (12) in the rear face (13) of the control element (1) as a dosed-quantity drop of sealing compound.

4. Method as set forth in any of the preceding Claims 1 to 3, **characterized by** the fact that the transparent mass (14) is subjected to curing after it has been applied to the control element (1).

5. Method according to Claim 4, **characterized by** the fact that the transparent mass (14) gets either cured due to UV radiation, due to an electron beam or due to heat, or undergoes self-curing due to its own chemical composition.

6. Method as set forth in any of the preceding Claims 1 to 5, **characterized by** the fact that the opening (12) is formed by milling, punching, cutting or etching.

7. Method according to any of the preceding Claims 1 to 6, **characterized by** the fact that the control element (1) is polished before the opening (12) is formed.

8. Method according to any of the preceding Claims 1 to 7, **characterized by** the fact that a colorant agent is added to the transparent mass (14).

9. Method according to any of the preceding Claims 1 to 8, **characterized by** the fact that the control element (1) is formed by pressure die casting of zinc.

10. Method according to any of the preceding Claims 1 to 8, **characterized by** the fact that the transparent mass (14) is injected to cover the flanks on the underside of the opening (12) in the rear face (13) of the control element (1).

11. Method according to any of the preceding Claims 1 to 10, **characterized by** the fact that a positioning frame (16) is attached in the marginal area (18) of the opening (12) in the rear face of the control element (1).

12. Control element for use in motor vehicles wherein said control element has a functional body in the front face of which a transparent section having the shape of at least one symbol defining the control function on the one hand and a section impervious to light are formed and wherein the functional body (9) is a pressure die casting provided with at least one opening (12) that extends all the way across the depth of said pressure die casting (9) and that is at least partly filled with a transparent mass (14) within the transparent section, **characterized by** the fact that a positioning frame (16) protrudes from the rear of said functional body (9) within the marginal area (18) of said opening (12) to confine and/or receive said transparent mass (14).

13. Control element as set forth in Claim 12, **characterized by** the fact that the transparent mass (14) is a quick-curing mass applied to a rear face (13) of the control element (1) in such a way as to adhere to the marginal area (18) of the opening.

14. Control element as set forth in Claim 12 or 13, **characterized by** the fact that the opening (12) is covered by the transparent mass (14) over its full width and length.

15. Control element as set forth in any of the preceding Claims 12 to 14, **characterized by** the fact that the opening (12) is filled with transparent mass (14) up to in level and flush with the front face (4) of the functional body (9).

16. Control element as set forth in any of the preceding Claims 12 to 15, **characterized by** the fact that the transparent mass (14) extends to above or below the front face (4) of the functional body (9) such that the symbol (2, 6, 8) is haptically perceivable.

17. Control element as set forth in any of the preceding Claims 12 to 16, **characterized by** the fact that the viscosity of the transparent mass (14) is selected on the basis of the size of the opening (12) to ensure that the mass (14) will adhere to the marginal area (18) of the opening (12) while at least partially filling it.

18. Control element as set forth in any of the preceding Claims 12 to 17, **characterized by** the fact that the transparent mass (14) is a translucent sealing compound.

19. Control element as set forth in any of the preceding Claims 12 to 19, **characterized by** the fact that the positioning frame (16) is constituted by spaced apart webs (17).

## Revendications

1. Procédé pour la fabrication d'un élément de commande, en particulier pour un véhicule automobile, dans lequel, sur une face avant (4) de l'élément de commande, sont formées une zone perméable à la lumière, sous la forme d'au moins un symbole pour la désignation de la fonction de commande, et une zone imperméable à la lumière,
- l'élément de commande (1) étant formé en tant que corps fonctionnel (9) métallique,
- au moins un évidement (12) étant réalisé sur la face avant (4) de l'élément de commande (1), au cours d'une étape de fabrication, conformément à la forme de la zone perméable à la lumière de l'élément de commande (1), et
- l'évidement (12) étant rempli, au moins dans certaines sections, avec une masse transparente (14),
**caractérisé en ce que** le corps fonctionnel (9) métallique est formé par moulage sous pression, en formant au moins une patte de montage (19) en saillie.

2. Procédé selon la revendication 1, **caractérisé en ce que** la masse transparente (14) est appliquée, sur une surface arrière (13) de l'élément de commande (1), sur une zone marginale (18) qui entoure l'évidement (12), la viscosité de la masse transparente (14) étant adaptée à la largeur de l'évidement (12).

3. Procédé selon revendication 1 ou 2, **caractérisé en ce que** la masse transparente (14) est coulée dans l'évidement (12) par amené d'une goutte coulée sur la face arrière (13) de l'élément de commande (1).

4. Procédé selon l'une des revendications 1 à 3, **caractérisé en ce que** la masse transparente (14) est durcie après l'application sur l'élément de commande (1).

5. Procédé selon la revendication 4, **caractérisé en ce que** la masse transparente (14) est durcie automatiquement sous l'action de rayons UV ou d'un faisceau électronique ou d'un processus thermique ou à la suite de la composition chimique de ladite masse.

6. Procédé selon l'une des revendications 1 à 5, **caractérisé en ce que** l'évidement (12) est réalisé par fraisage ou par estampage ou par coupe ou par attaque chimique.

7. Procédé selon l'une des revendications 1 à 6, **caractérisé en ce que** l'élément de commande (1) est poli avant la réalisation de l'évidement (12).

8. Procédé selon l'une des revendications 1 à 7, **caractérisé en ce que** la masse transparente (14) est coloriée dans la masse.

9. Procédé selon l'une des revendications 1 à 8, **caractérisé en ce que** l'élément de commande (1) est formé par moulage sous pression de zinc.

10. Procédé selon l'une des revendications 1 à 8, **caractérisé en ce que** l'évidement (12) est rempli par injection, sur la face arrière (13) de l'élément de commande (1), avec la masse transparente (14).

11. Procédé selon l'une des revendications 1 à 10, **caractérisé en ce que**, sur la face arrière (13) de l'élément de commande (1), dans la zone marginale (18) de l'évidement (12), un cadre de positionnement (16) est formé.

12. Élément de commande pour véhicules automobiles, avec un corps fonctionnel (9) qui, sur une surface avant, présente, d'une part, une zone perméable à la lumière sous la forme d'au moins un symbole pour la désignation de la fonction de commande, et, d'autre part, une zone imperméable à la lumière (10), en ce que le corps fonctionnel (9) est réalisé en tant que pièce moulées sous pression, avec au moins un évidement (12) qui s'étend dans toute la profondeur de ladite pièce moulée sous pression, et est rempli, au moins partiellement, avec une masse transparente (14), **caractérisé en ce que**, dans la zone marginale (18) de l'évidement (12), à partir de la face arrière (13) du corps fonctionnel (9), s'élève un cadre de positionnement (16) pour la limitation et / ou pour la réception de la masse transparente (14).

13. Élément de commande selon la revendication 12, **caractérisé en ce que** la masse transparente (14) consiste en une masse durcissant rapidement, qui est appliqué, sur une face arrière (13) de l'élément de commande (1), en adhérant à une zone marginale (18) de l'évidement (12).

14. Élément de commande selon revendication 12 ou 13, **caractérisé en ce que** l'évidement (12) est recouvert sur toute la largeur et la longueur par la masse transparente (14).

15. Elément de commande selon l'une des revendications 12 à 14, **caractérisé en ce que** l'évidement (12) est rempli en profondeur avec la masse transparente (14) de sorte que ladite masse transparente (14) s'étende à fleur de la face avant (4) du corps fonctionnel (9).

16. Élément de commande selon l'une des revendications 12 à 15, **caractérisé en ce que** la masse transparente (14) s'étend en relief, ou en profondeur sur la face avant (4) du corps fonctionnel (9) de sorte que le symbole (2, 6, 8) soit perceptible au toucher.

17. Élément de commande selon l'une des revendications 12 à 16, **caractérisé en ce que** la viscosité de la masse transparente (14) est adaptée à la dimension de l'évidement (12) de sorte que ladite masse transparente (14), adhérant à la zone marginale (18) de l'évidement (12), remplisse au moins partiellement celui-ci.

18. Elément de commande selon l'une des revendications 12 à 17, **caractérisé en ce que** la masse transparente (14) consiste en une masse de scellement translucide.

19. Élément de commande selon l'une des revendications 12 à 18, **caractérisé en ce que** le cadre de positionnement (16) est formé par des pattes (17) disposées à distance les unes des autres.
